# EUROPEAN PATENT APPLICATION

(11) **EP 1 669 745 A1**
(43) Date of publication of application: **14.06.2006**
(21) Application number: 05109741.8
(22) Date of filing: 19.10.2005
(51) Int. Cl.: G01N 25/72

(54) **Non-contact surface coating monitor and method of use**

(30) Priority: 10.12.2004 US 905021
(71) Applicant: ANDREW CORPORATION, Orland Park Illinois 60462 (US)
(72) Inventor: Witthoft, Mark, 60411, Lockport (US)
(74) Representative: Lind, Urban Arvid Oskar

(57) **Abstract**

A non-contact surface coating monitor for a surface, including a plurality of temperature sensors coupled to a display. The plurality of temperature sensors arrayed to each sense the temperature of a zone of the surface. An out of range temperature differential between the different temperature sensors indicating an area without surface coating coverage and or an area with excessive coverage.

## Description

### BACKGROUND

Field of the Invention

The invention generally relates to monitoring the uniformity of surface coatings. More particularly, the invention relates to non-contact measurement of surface coating uniformity by monitoring of temperature differentials across the coated surface.

Description of Related Art

Surface coatings, such as adhesive and or polymer coatings are applied in a wide range of different manufacturing processes. For example, coaxial cables in the RF communications industry use a surface coat adhesive application upon the inner conductor to secure the extruded foam insulator applied between the inner and outer conductors. The adhesive surface coating should be uniform about the outer surface of the inner conductor or electrical and or mechanical uniformity of the resulting coaxial cable may be degraded. For example, if the adhesive does not completely cover the inner conductor, the insulator may sag after it has been applied and or other defects, such as nulls/voids may result. Further, the production equipment may be fouled, scrap generated and a break may arise in otherwise continuous production. At the other extreme, over-application of adhesive unnecessarily increases production costs and may introduce electrical inconsistencies in the dielectric value between the inner and outer conductor.

Typically, an array of surface coating applicator(s) such as spray nozzles or small extruders and associated precision tooling, surrounding the path of the target surface, for example the inner conductor of a coaxial cable, are individually manually adjusted according to the results of scrape tests upon the target surface. In a scrape test of an adhesive coated inner conductor, a scrape tool is held against one side of the moving inner conductor and the adhesive surface coating buildup over a short test period is measured. The flow rate and or positions of the various applicators are adjusted until scrape testing at a range of different positions around the inner conductor each shows a similar level of adhesive build-up. Scrape testing is time consuming, messy and because the surface coating is disturbed by the test, creates a section of scrap with each test. Further, once the production run has begun, scrape testing cannot be performed without causing a production break.

Another method of monitoring the adhesive surface coating uniformity is to physically skim/touch the adhesive coated inner conductor as it passes. Touching a moving line in a production environment is dangerous and messy. Further, unless monitored well downstream of the applicator(s), the hot surface coating can burn the operators fingers.

Competition between manufacturers has focused attention on cost reductions resulting from increased manufacturing efficiencies, optimization of production inputs and reduced scrap production. Operator safety is also a significant concern.

Therefore, it is an object of the invention to provide an apparatus that overcomes deficiencies in the prior art.

### BRIEF DESCRIPTION OF THE DRAWINGS

The accompanying drawings, which are incorporated in and constitute a part of this specification, illustrate embodiments of the invention and, together with a general description of the invention given above, and the detailed description of the embodiments given below, serve to explain the principles of the invention.

Figure 1 is a schematic side view of a first embodiment of the invention as applied to monitoring the surface coating of a cylindrical body, for example an electrical conductor.

Figure 2 is a schematic end view of Figure 1.

Figure 3 is a schematic end view of a second embodiment of the invention as applied to monitoring the surface coating of a planar body, for example an extruded panel.

### DETAILED DESCRIPTION

The present inventor has recognized that surface coating thickness and or uniformity across a surface is proportional to the temperature differentials across the surface as it moves past a temperature-sensing gateway. Non-contact measurement of the temperature across the coated surface eliminates the need for the prior destructive contact testing of the coating thickness and or uniformity.

To improve the viscosity, and thereby the application characteristics, surface coatings such as adhesives and or polymers are typically applied at an elevated temperature relative to the surface they are applied to. Upon application, the coatings begin cooling. Assuming the surface the coating is applied to is generally uniform, the cooling across a uniformly coated surface will also be uniform. Should known heat exchange characteristic differentials of the surface exist, such as the edges of a planar surface or thermally conductive elements extending away from discrete portions of the surface backside, these differentials can be factored into the observed temperature differential, if any.

Variations detected in the surface temperature may be used to provide operator and or automatic feedback of the presence of and or variations in the surface coating thickness. For example, the absence of the surface coating on an area of the surface monitored by a temperature sensor will result in a significantly lower temperature reading. Similarly, when each of the temperature sensors has at least a minimum temperature reading reflecting the presence of the surface coating but one or more of the temperature sensors indicates an increased temperature reading, a coating thickness variation exists with increased thickness indicated at the locations of the increased temperature readings.

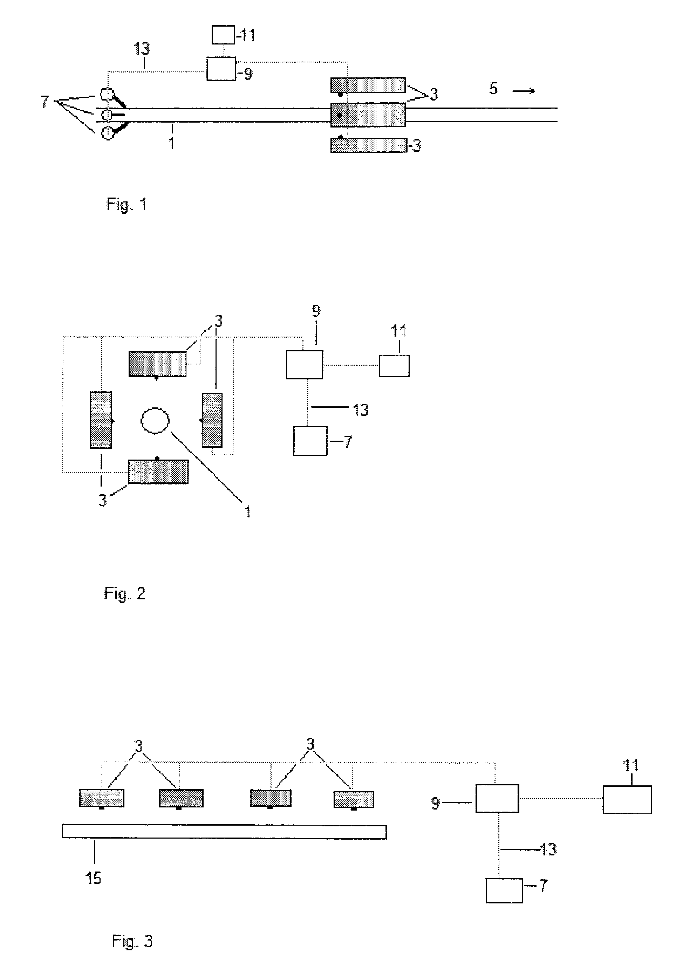

The invention is described in detail with respect to a first embodiment, as shown in figures 1 and 2, with reference to the monitoring of a continuously applied adhesive surface coating during coaxial cable manufacture. One skilled in the art will appreciate that the invention may be similarly applied to any process where monitoring of a heated surface coating is desired.

As shown in figures 1 and 2, the temperature across the surface area of a cylindrical body 1 such as the inner conductor of a coaxial cable is measured by an array of temperature sensor(s) 3 arranged around the path 5 of the cylindrical body 1. As shown, four temperature sensor(s) 3 may be arranged representative of the zone coverage of a similar arrangement of the upstream coating applicator(s) 7. Although the adjacent zones may overlap, the majority of the coating application in each zone is attributable to the associated applicator 7. Thereby, results of a specific adjustment to the distance of an individual applicator 7 from the surface and or individual applicator flow rate adjustments may be observed at the corresponding in-line downstream temperature sensor 3. Where more precise feedback is desired, for example an indication of the spray pattern and or application coverage of individual applicator(s) 7, the zones may be divided between an increased number of temperature sensor(s) 3, each temperature sensor 3 configured to narrowly sense only a portion of each zone. Alternatively, fewer temperature sensor(s) 3, for example each with broader and or non-overlapping zone coverage, may be applied where monitoring the presence of the surface coating rather than the uniformity of the surface coating is a priority.

Non-contact temperature sensor(s) 3 may be selected from, for example, thermocouple, RTD, thermistor, infrared and or solid-state temperature sensors. Temperature sensor(s) 3 with a narrow directional sensing characteristic improve the accuracy of the temperature data obtained from the target surface. A further consideration in the temperature sensor 3 selection is the temperature sensor 3 resistance to, and or ease of recovery from, fouling due to the presence of dirt, splatter, off-gassing or the like in the process environment.

The surface temperature data may be displayed, for example, on one or more visual display(s) 9 for operator evaluation and action as necessary. Alternatively and or additionally, the display 9 may include or be coupled to a process controller, programmable logic controller and or computer, all of which are collectively referred to herein as a "processor", receiving the temperature data as input(s) for functions such as quality control recording, out of range alarm 11 and or process control link(s) 13 with the applicator(s) 7. For ease of operation and or where known temperature differentials exist, the processor may be loaded with an optimal temperature profile, against which the temperature sensor outputs are compared for alarm purposes and or automated process control via the process control link 13.

To allow quick configuration of the temperature sensor(s) with respect to the surface to be monitored, the temperature sensor(s) may be commonly mounted in an assembly adapted for positional adjustment relative to the surface in, for example, both the X-axis and the Y-axis. Thereby, the position of the temperature sensor(s) may be quickly adjusted for different positions of the cylindrical body 1 along the path 5 depending upon the alternative cylindrical body(s) 1 processable in a common production line and or variances in the cylindrical body 1 position that may occur as a production run progresses.

In further embodiments, as shown for example in figure 3, the invention may also be applied to surface coatings applied to a single side of planar surface(s) 15, for example in multi-layer laminate panel fabrication. Reviewing figures 2 and 3, one skilled in the art will recognize that a temperature sensor distribution across the extents of the coated surface, whether the coated surface is localized in a target area of the surface, extending across a single planar side or over 360 degrees, enables monitoring of the complete target surface that is being coated.

One skilled in the art will appreciate that by eliminating manual contact testing of the surface coating, the present invention represents a significant improvement in operator safety and process control. Further, the invention enables significant reductions in process interruptions and scrap generation.

Table of Parts

| | |
|---|---|
| 1 | cylindrical body |
| 3 | temperature sensor |
| 5 | path |
| 7 | applicator |
| 9 | display |
| 11 | alarm |
| 13 | process control link |
| 15 | planar body |

Where in the foregoing description reference has been made to ratios, integers, components or modules having known equivalents then such equivalents are herein incorporated as if individually set forth.

While the present invention has been illustrated by the description of the embodiments thereof, and while the embodiments have been described in considerable detail, it is not the intention of the applicant to restrict or in any way limit the scope of the appended claims to such detail. Additional advantages and modifications will readily appear to those skilled in the art. Therefore, the invention in its broader aspects is not limited to the specific details, representative apparatus, methods, and illustrative examples shown and described. Accordingly, departures may be made from such details without departure from the spirit or scope of applicant's general inventive concept. Further, it is to be appreciated that improvements and/or modifications may be made thereto without departing from the scope or spirit of the present invention as defined by the following claims.

## Claims

1. A non-contact surface coating monitor for a surface, comprising:
a plurality of temperature sensors coupled to a display, the plurality of temperature sensors arrayed to each sense the temperature of a zone of the surface.

2. The assembly of claim 1, further including an alarm energized upon an out of range indication from the display.

3. The assembly of claim 1, wherein the number of temperature sensors is less than a number of upstream applicators.

4. The assembly of claim 1, wherein the number of temperature sensors is equal to a number of upstream applicators.

5. The assembly of claim 1, wherein the number of temperature sensors is greater than a number of upstream applicators.

6. The assembly of claim 1, wherein the temperature sensors are arranged around the extents of the surface with the surface coating.

7. The assembly of claim 1, further including an adjustable mounting assembly for the temperature sensors.

8. The assembly of claim 7, wherein the mounting assembly is adjustable in the X-axis and the Y-axis.

9. The assembly of claim 1, wherein the display includes a processor that calculates a temperature differential between the different temperature sensors.

10. The assembly of claim 1, further including a processor coupled to the display.

11. The assembly of claim 10, wherein the processor has an output for controlling a nozzle applicator applying the surface coating to the surface.

12. The assembly of claim 10, wherein the processor is loadable with a desired reference temperature profile, against which an output of the temperature sensors is compared.

13. A method for non-contact monitoring of the surface coating of a surface, comprising the steps of:
arranging a plurality of temperature sensors across the surface;
coupling a temperature sensor output of the temperature sensors to a display; and
analyzing the temperature sensor outputs at the display for the presence of a temperature differential.

14. The method of claim 13, further including the step of adjusting an applicator of the surface coating according to the temperature differential to reduce the temperature differential.

15. The method of claim 14, wherein a processor configured to minimize the temperature differential is used to control the applicator.

16. A non-contact surface coating monitor for a surface, comprising:
a plurality of temperature sensors mounted on an adjustable assembly;
the plurality of temperature sensors arrayed across the extents of the surface to be monitored to each sense the temperature of a zone of the surface;
a display coupled to the temperature sensors having a processor loadable with a desired reference temperature profile, against which an output of the temperature sensors is compared; and
an alarm coupled to the processor, configured to activate if the output of the temperature sensors exceeds a desired variance from the reference temperature profile.

17. The assembly of claim 16, further including a process control link between the processor and an applicator of the surface coating configured to minimize the variance from the desired reference temperature profile.
